Europäisches Patentamt

European Patent Office

Office européen des brevets

(19)

(11) Veröffentlichungsnummer: **0 216 119 B1**

# (12) EUROPÄISCHE PATENTSCHRIFT

(45) Veröffentlichungstag der Patentschrift: **24.07.91**

(51) Int. Cl.⁵: **C08J 7/04**

(21) Anmeldenummer: **86111321.5**

(22) Anmeldetag: **16.08.86**

(54) **Verfahren zur Verminderung der Durchlässigkeit eines Kunststoffteils durch Beschichtung und beschichtetes Kunststoffteil.**

(30) Priorität: **24.08.85 DE 3530366**

(43) Veröffentlichungstag der Anmeldung:
**01.04.87 Patentblatt 87/14**

(45) Bekanntmachung des Hinweises auf die
Patenterteilung:
**24.07.91 Patentblatt 91/30**

(84) Benannte Vertragsstaaten:
**AT BE CH DE FR GB IT LI LU NL SE**

(56) Entgegenhaltungen:
GB-A- 868 924
US-A- 3 023 072

CHEMICAL ABSTRACTS, Band 95, Nr. 2, 13.
Juli 1981, Seite 84, Zusammenfassung Nr.
152272q, Columbus, Ohio, US

(73) Patentinhaber: **Stock, Jürgen Dr.**
**Am Bülten 3**
**W-3300 Braunschweig(DE)**

(72) Erfinder: **Stock, Jürgen Dr.**
**Am Bülten 3**
**W-3300 Braunschweig(DE)**

(74) Vertreter: Lins, **Edgar, Dipl.-Phys. et al**
**Patentanwälte Gramm + Lins Theodor-**
**Heuss-Strasse 2**
**W-3300 Braunschweig(DE)**

## Beschreibung

Die Erfindung betrifft ein Verfahren zur Behandlung der Oberfläche eines Kunststoffteils, insbesondere aus Polypropylen oder Polyethylen, zur Verminderung der durch das Kunststoffteil hindurch erfolgenden Diffusion. Die Erfindung betrifft ferner ein entsprechend behandeltes Kunststoffteil.

Eine Behandlung der Oberfläche von Kunststoffteilen wird bei Kraftstoffbehältern aus Kunststoff durchgeführt. Kraftstoffbehälter aus Polypropylen oder Polyethylen sind insbesondere auch für bleifreie Benzinarten besonders geeignet, da metallische Kraftstoffbehälter wegen der Korrosivität der bleifreien Kraftstoffe erhebliche Nachteile aufweisen.

Die Kunststoffbehälter erlauben jedoch ohne eine Behandlung der Oberfläche eine zu hohe Diffusion von Kraftstoffdämpfen. Diese Diffusion ist aus Gründen des Umweltschutzes und wegen der Kraftstoffverluste nicht tolerierbar. Die Innenflächen der Kraftstoffbehälter werden daher in einer bekannten Technik mit gasförmigem Schwefeltrioxid sulfoniert, wodurch die Oberfläche des Tanks hydrophil wird und damit die Diffusion des Kraftstoffes verhindert. Ein weiteres Verfahren zur Diffusionsminderung besteht in der Fluorierung des Behälters. Dieses Verfahren ist industriell jedoch noch nicht erprobt.

Sowohl die Sulfonierung als auch die Fluorierung der Kraftstoffbehälter weisen den Nachteil auf, daß aggressive und gesundheitsgefährdende Stoffe verwendet werden, deren Freisetzung in die Umwelt unter allen Umständen verhindert werden muß. Neben der Gesundheitsgefährdung sind die Verfahren sehr aufwendig und müssen unter großen Sicherheitsvorkehrungen ausgeführt werden.

Durch die US-A-3,023,072 ist es bekannt, Kunststoffasern und gegebenenfalls auch -filme mit einer Beschichtung zu versehen, die aus einem wasserlöslichen deacetylierten Chitin und einem reaktiven Werner-Chromkomplex besteht. Der Chromkomplex polymerisiert beim Aufheizen und bildet zusammen mit dem deacetylierten Chitin eine Schicht, die zur Aufnahme von Farben besonders gut geeignet ist. Die Beschichtung ermöglicht daher das Einfärben von Kunststoffasern, deren Einfärbung sonst Probleme macht. Die dabei verwendeten reaktiven Chromkomplexe sind allerdings stark toxisch und schwierig zu verarbeiten.

Der Erfindung liegt die Aufgabe zugrunde, eine diffusionsmindernde Behandlung der Oberfläche von Kunststoffteilen durchzuführen, die weder bei der Herstellung noch im Gebrauch des Kunststoffteils starke toxische Gefährdungen mit sich bringt.

Diese Aufgabe wird erfindungsgemäß durch ein Verfahren der eingangs erwähnten Art gelöst, bei dem ein natürlich vorkommendes, enzymatisch funktionalisiertes Zellulosederivat mit einer funktionellen Phosphat-, Sulfat-, Carbonat- oder Aminogruppe in Wasser gelöst wird, der Lösung Monomere oder Polymere zugesetzt werden, die mit der betreffenden Funktionsgruppe des Zellulosederivats reagieren oder das Zellulosederivat chemisch einbinden, und die Lösung auf die Oberfläche des Kunststoffteils aufgebracht wird und dort durch Trocknung einen durch die zugesetzten Monomere oder Polymere stabilisierten Film bildet.

Die Aufgabe wird ferner mit einem Kunststoffteil, insbesondere aus Polypropylen oder Polyethylen, mit einem auf eine Oberfläche zur Verringerung der durch das Kunststoffteil erfolgenden Diffusion aufgebrachten Film gelöst, der unter Verwendung eines natürlich vorkommenden, enzymatisch funktionalisierten Zellulosederivats mit einer funktionellen Phosphat-, Sulfat-, Carbonat- oder Aminogruppe gebildet ist, mit der ein Monomer oder Polymer zur Stabilisierung des Films durch eine Kondensationsreaktion verbunden ist.

Als ein geeignetes Zellulosederivat kommt in erster Linie ein unter dem Namen Chitosan bekanntes deacetyhlisiertes Chitin in Frage, das als Monomereinheit Glukosamin aufweist (Poly-($\beta$ -1.4-Glukosamin), das ein stickstoffhaltiges, unverzweigtes Polysaccharid ist). Die funktionelle Gruppe ist daher eine Aminogruppe. Mit den anderen, infrage kommenden funktionellen Gruppen gebildete Zellulosederivate sind Agar, Alginat oder Carragheenan.

Um eine Diffusionssperre für beispielsweise Kraftstoffe zu erhalten, wird das Zellulosederivat in Form einer wäßrigen Lösung auf die Oberfläche aufgebracht. Gelingt die Lösung in Wasser nicht in der nötigen Geschwindigkeit, kann sie durch Erhitzen und ggf. durch Einstellung des pH-Werts in den sauren Bereich, also durch Zugabe von Säuren, wie Ameisensäure, Essigsäure oder einer Mineralsäure, unterstützt werden. Entsprechend der gewünschten Aufbringmethode (Spritzen, Rakeln, Gießen o.ä.) kann die Einstellung der Viskosität mit Hilfe eines leicht flüchtigen organischen Lösungsmittels, vorzugsweise Aceton, erfolgen. Hierdurch wird der sonst erforderliche Wassergehalt reduziert und das Abtrocknen der Schicht erleichtert.

Zur Stabilisierung des Zellulosederivatfilms werden geeignete Monomere bzw. reaktive Polymere zugesetzt, die eine Kondensationsreaktion unter Einbeziehung der Zellulosederivate durchführen. Besonders geeignet sind Polyepoxide, deren Aushärtezeit durch Zusatz von Härtern gesteuert werden kann. Andere geeignete Zusätze sind Carbonsäureanhydride enthaltende Polymere, Säurechlorid enthaltende Polymere, Polyurethane o.ä.. Bei dem Zusatz der haftungsunterstützenden reaktiven Mono- oder Polymere können die Zellulosederivate in die Reaktionskette im Sinn einer Pfropfpolymerisation, -kondensation oder -addition chemisch eingebunden oder aber auch nur in den entstehenden Film eingeschlossen sein. Durch die Zugabe der haftungsunterstützenden reaktiven Monomere oder Polymere zu der ggf. mit dem Lösungsmittel in der Viskosität eingestellte Lösung des Polysaccharids entsteht eine über eine gewisse Zeit (eingestellt durch kurz vor der Verarbeitung zugegebene Härter oder Reaktionsbeschleuniger) klebrige Oberflächenschicht, die besonders gute Eigenschaften als Grundierschicht zeigt und problemfrei lackiert oder beklebt werden kann.

Nach dem Aufbringen des stabilisierten Zellulosederivats bildet die Schicht nach dem Abtrocknen einen für organische Lösungsmittel unlöslichen und für Wasser unlöslichen bis schwerlöslichen Film, der für eine hydrophile Oberfläche des Kunststoffbehälters sorgt und somit die Diffusion der organischen Dämpfe verhindert.

Die zur Beschichtung der Kunststoffteile verwendeten natürlich vorkommenden, enzymatisch funktionalisierten Zellulosederivate haben den wesentlichen Vorteil, daß sie sich besonders einfach und kostengünstig auf die Oberfläche aufbringen lassen. Es ist bekannt, andere Zellulosederivate zur Beschichtung, beispielsweise als Lackgrundlage, zu verwenden. Die Herstellung dieser Zellulosederivate, beispielsweise Methylzellulose-Verbindungen, müssen aus der wasserunlöslichen Zellulose in relativ komplizierten Verfahrensschritten funktionalisiert werden, um die nötige Lösbarkeit zu erhalten. Diese Verfahrensschritte sind industriell kaum durchführbar bzw. erfordern einen sehr hohen Aufwand, der den praktischen Einsatz für viele Anwendungsfälle unwirtschaftlich macht.

Beispiel:

Eine handelsübliche Chitosan-Lösung - Einstellung low viscosity - (Hersteller: Chugai Boyeki Co., Ltd., Tokyo, Japan) wird in Wasser durch Erwärmung der Suspension auf ca. 80 °C unter Zugabe von Essigsäure, Ameisensäure oder Salzsäure mit einer Konzentration von 5 - 7 ml konzentrierter Säure pro Liter Chitosan-Suspension gelöst. Gegebenenfalls wird die Viskosität durch Zugabe von Aceton eingestellt, um das gewünschte Auftragverfahren (Spritzen, Rakeln, Gießen o. ä.) durchführen zu können. Als Reaktivkomponente wird danach ein Epoxidharz zugesetzt, das mit den Aminogruppen des Chitosans reagiert. Die Topfzeit läßt sich durch einen aminogruppenhaltigen Härter einstellen, der kurz vor dem Auftragen des Films zugesetzt wird. Verwendet wurde eine Epoxid-Härterkombination, die unter der Bezeichnung UHU-Schnellfest (Hersteller: Lingner & Fischer, Bühl, W. Germany) handelsüblich ist.

Die Trocknungszeit des Films wird durch den Wassergehalt der Suspension bestimmt. Der Zusatz von Aceton reduziert die Trocknungszeit. Während der Trocknungszeit, die bis zu 24 Stunden bei freier Oberfläche dauern kann und damit wesentlich länger als die Reaktionszeit ist, kann die Beschichtung zum Kleben eingesetzt werden. Ein Verarbeiten der noch warmen Mischung reduziert ebenfalls die Dauer der Aktionszeit und der Trocknung.

Nach der Trocknung ist der Film in Wasser, Kraftstoffen und organischen Lösungsmitteln unlöslich.

Bei Bedarf kann die Haftung des Films durch vorheriges Flämmen der Kunststoffoberfläche aus Polyethylen oder Polypropylen verbessert werden. Die Oberfläche wird dabei partiell oxidiert, wodurch sich die Eigenschaften des Kunststoffes nicht ändern.

Bei einer so aufgebrachten Schicht konnte die Diffusionsrate auf ein Viertel bis ein Fünftel des unbehandelten Kunststofftanks herabgesetzt werden. Diese Herabsetzung erwies sich auch über eine längere Lagerdauer als stabil.

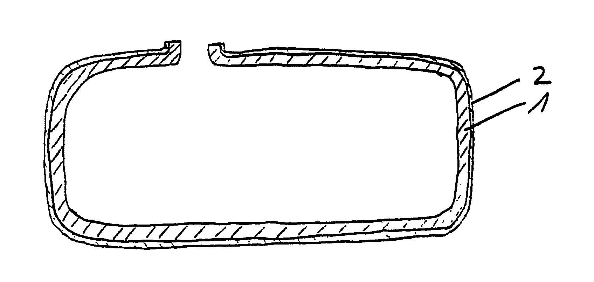

Die Zeichnung zeigt einen Kraftstoffbehälter, der aus einer Kunststoffwandung 1 besteht, die an der Außenseite mit einem Polysaccharidfilm 2 zum Zweck der Diffusionsminderung beschichtet ist. Wandung 1 und Film 2 sind aus Gründen der Darstellbarkeit überproportional dick gezeichnet.

**Patentansprüche**

1. Verfahren zur Behandlung der Oberfläche eines Kunststoffteils, insbesondere aus Polypropylen oder Polyethylen, zur Verminderung der durch das Kunststoffteil hindurch erfolgenden Diffusion, bei dem ein natürlich vorkommendes, enzymatisch funktionalisiertes Zellulosederivat mit einer funktionellen Phosphat-, Sulfat-, Carbonat- oder Aminogruppe in Wasser gelöst wird, der Lösung Monomere oder Polymere zugesetzt werden, die mit der betreffenden Funktionsgruppe des Zellulosederivats reagieren oder das Zellulosederivat chemisch einbinden, und die Lösung auf die Oberfläche des Kunststoffteils aufgebracht wird und dort durch Trocknung einen durch die zugesetzten Monomere oder Polymere stabilisierten Film bildet.

2. Verfahren nach Anspruch 1, dadurch gekennzeichnet, daß zur Unterstützung der Lösung des Zellulosederivats in Wasser diesem eine Säure zugesetzt wird.

3. Verfahren nach Anspruch 1 oder 2, dadurch gekennzeichnet, daß zur Einstellung dem Viskosität der Lösung ein leicht flüchtiges organisches Lösungsmittel zugesetzt wird.

4. Verfahren nach einem dar Ansprüche 1 bis 3, dadurch gekennzeichnet, daß der Lösung des Zellulosederivats ein Polyepoxid zugesetzt wird.

5. Verfahren nach Anspruch 4, dadurch gekennzeichnet, daß die Reaktionszeit des Polyepoxids durch Zugabe eines Härters oder Reaktionsbeschleunigers gesteuert wird.

6. Verfahren nach einem der Ansprüche 1 bis 5, dadurch gekennzeichnet, daß als Zellulosederivat Chitosan verwendet wird.

7. Verfahren nach einem der Ansprüche 1 bis 6, dadurch gekennzeichnet, daß als leicht flüchtiges organisches Lösungsmittel Aceton verwendet wird.

8. Kunststoffteil, insbesondere aus Polypropylen oder Polyethylen, mit einem auf eine Oberfläche zur Verringerung der durch das Kunststoffteil erfolgenden Diffusion aufgebrachten Film, der unter Verwendung eines natürlich vorkommenden, enzymatisch funktionalisierten Zellulosederivats mit einer funktionellen Phosphat-, Sulfat-, Carbonat- oder Aminogruppe gebildet ist, mit der ein Monomer oder Polymer zur Stabilisierung des Films durch eine Kondensationsreaktion verbunden ist.

9. Kunststoffteil nach Anspruch 8, dadurch gekennzeichnet, daß der Film aus Chitosan mit einem Polyepoxid besteht.

## Claims

1. Process for the treatment of the surface of a plastic article, in particular of polypropylene or polyethylene, for the reduction of the diffusion which takes place through the plastics article, in which a naturally occurring, enzymatically functionalized cellulose derivative containing a functional phosphate, sulphate, carbonate or amino group is dissolved in water, monomers) or polymers which react with the functional group in question on the cellulose derivative or bond the cellulose derivative chemically are added, and the solution is applied to the surface of the plastics article and forms there, by drying, a film stabilized by the monomers or polymers added.

2. Process according to claim 1, characterized in that an acid is added to the water to assist in dissolution of the cellulose derivative therein.

3. Process according to claim 1 or 2, characterized in that a highly volatile organic solvent is added to adjust the viscosity of the solution.

4. Process according to one of claims 1 to 3, characterized in that a polyepoxide is added to the solution of the cellulose derivative.

5. Process according to claim 4, characterized in that the reaction time of the polyepoxide is controlled by addition of a hardener or reaction accelerator.

6. Process according to one of claims 1 to 5, characterized in that chitosan is used as the cellulose derivative.

7. Process according to one of claims 1 to 6, characterized in that acetone is used as the highly volatile organic solvent.

8. Plastics article, in particular of polypropylene or polyethylene, which has a film which is applied to one surface for reduction of the diffusion which takes place through the plastics article and is formed using a naturally occurring, enzymatically functionalized cellulose derivative containing a functional phosphate, sulphate, carbonate or amino group with which a monomer or polymer in bonded by a condensation reaction for stabilization of the film.

9. Plastics article according to claim 8, characterized in that the film consists of chitosan together with a polyepoxide.

## Revendications

1. Procédé de traitement de la surface d'une pièce de matière synthétique, en particulier de polypropylène ou de polyéthylène, pour diminuer la diffusion se produisant à travers la pièce synthétique, dans lequel on dissout dans l'eau un dérivé de cellulose naturel enzymatiquement fonctionnalisé avec un groupe fonctionnel phosphate, sulfate, carbonate ou amino, on ajoute à la solution des monomères ou des polymères qui réagissent avec le groupe fonctionnel en question du dérivé de cellulose ou qui lient chimiquement le dérivé de cellulose, et on dépose la solution à la surface de la pièce synthétique, cette solution y formant par séchage une pellicule stabilisée par les monomères ou polymères ajoutés.

2. Procédé selon la revendication 1, caractérisé en ce que pour renforcer la solution du dérivé de cellulose dans l'eau on y ajoute un acide.

3. Procédé selon la revendication 1 ou 2, caractérisé en ce que pour **régler la viscosité de la** solution on ajoute un solvant organique légèrement volatil.

4. Procédé selon l'une des revendications 1 à 3, caractérisé en ce qu'on ajoute à la solution du dérivé de cellulose un polyépoxyde.

5. Procédé selon la revendication 4, caractérisé en ce qu'on règle le temps de réaction du polyépoxyde par l'addition d'un durcissant ou d'un accélérateur de réaction.

6. Procédé selon l'une des revendications 1 à 5, caractérisé en ce qu'on utilise comme dérivé de cellulose le chitosan.

7. Procédé selon l'une des revendications 1 à 6, caractérisé en ce qu'on utilise comme solvant organique légèrement volatil l'acétone.

8. Pièce de matière synthétique, en particulier de polypropylène ou de polyéthylène, avec une pellicule déposée à la surface pour diminuer la diffusion se produisant à travers la pièce de matière synthétique, cette pellicule étant formée en utilisant un dérivé de cellulose naturel enzymatiquement fonctionnalisé avec un groupe phosphate, sulfate, carbonate ou amino fonctionnel, et en liant à ce groupe un monomère ou polymère par une réaction de condensation pour stabiliser la pellicule.

9. Pièce de matière synthétique selon la revendication 8, caractérisée en ce que la pellicule se compose de chitosan avec un polyépoxyde.